# EUROPÄISCHE PATENTANMELDUNG

(11) **EP 1 004 797 A2**
(43) Veröffentlichungstag der Anmeldung: **31.05.2000**
(21) Anmeldenummer: 99123394.1
(22) Anmeldetag: 24.11.1999
(51) Int. Cl.: F16H 7/02

(54) **Geräuscharmer Zahnriementrieb**

(30) Priorität: 27.11.1998 DE 19854849
(71) Anmelder: ContiTech Antriebssysteme GmbH, 30165 Hannover (DE)
(72) Erfinder: Berger, Ralf, 30559 Hannover (DE); Beck, Josef, 31139 Hildesheim (DE); Bonkowski, Manfred, 30900 Wedemark (DE)

(57) **Zusammenfassung**

Bei einem aus Zahnriemen (12) und Zahnscheibe (4) bestehenden Zahnriementrieb (2) soll ein geräuschreduziertes Laufverhalten erzielt werden. Korrespondierend zu mindestens einem zylindrisch ausgebildeten Bereich (10a,10b) der Zahnscheibe (4) ist die Laufseite des Zahnriemens (12) mit mindestens einem ungezahnten, nicht unterbrochenen glatten Verdickungsstreifen (16a,16b) versehen. Seine Höhe (20a,20b) und der Radius des mindestens einen zylindrischen Bereichs (10a,10b) der Zahnscheibe (4) sind so gewählt, daß beim Betrieb des Riementriebs (2) eine Abstützung des Riemens (12) auf der Zahnscheibe (4) durch Kontakt zwischen Riemen-Zahngrund (24) und Scheiben-Zahnkopf (26) bzw. zwischen Riemen-Zahnkopf (28) und Scheiben-Zahngrund (30) erfolgt.

## Beschreibung

Grundlage der vorliegenden Erfindung ist ein aus Zahnriemen und Zahnscheibe bestehender geräuscharmer Zahnriementrieb mit den im Oberbegriff des Anspruchs 1 genannten Merkmalen.

Ein bei Zahnriementrieben nach wie vor nicht befriedigend gelöstes Problem besteht in der Geräuschentwicklung, verursacht insbesondere durch den sogenannten Polygoneffekt. Unter Polygoneffekt versteht man das periodische Einknicken des Riemens im jeweils mit der Zahnscheibe in Eingriff stehenden Riemen-Zahngrund. Wegen der Unterbrechungen der Berührung Zahnriemen/Zahnscheibe ergibt sich eine periodische Radialschwingung des Riemens während des Abrollvorganges. Zusätzlich gibt es ein Aufschlaggeräusch, das beim Auftreffen flächiger Riemenzonen auf die Zahnscheibe entsteht.

Bei Verwendung von bogenverzahnten Riemen erfolgt die periodische Berührung und Unterbrechung zwischen Riemen und Zahnscheibe nicht abrupt sondern gleitend. Eine harte Kontaktnahme nebst einer damit verbundenen Geräuschentwicklung läßt sich aber auch bei Bogenverzahnung nicht völlig vermeiden.

Der Patentschrift EP 0 389 741 A2 (DE 39 09 949 C2) liegt die Aufgabe zugrunde, den Umlauf eines Zahnriemens auf einer Zahnscheibe mit Hilfe einer mittig auf dem Zahnriemen angeordneten Längsrippe oder zwei seitlich angeordneten Längsrippen geräuschärmer zu gestalten. Diese mindestens eine Längsrippe, die Quernuten aufweist, korrespondiert zu mindestens einer in der Zahnscheibe befindlichen Längsnut. Um die Polygonwirkung zu bekämpfen, ist in der Längsnut ein Weichgummiring vorgesehen. Auf diese Weise laufen zwar die auf der Längsrippe durch die Quernuten gebildeten Klötze sanfter auf der Scheibe ab, der durch das Abrollen des sonstigen Zahnriemens auf der Riemenscheibe gegebene Polygoneffekt ist aber nach wie vor vorhanden. Dies kann durch den in der Längsrinne angeordneten Weichgummiring nicht verhindert werden.

Die Aufgabe der vorliegenden Erfindung, wie sie mit Anspruch 1 im wesentlichen gelöst ist, besteht in der Schaffung eines Zahnriementriebs mit geräuschreduziertem Laufverhalten.

Die Erfindung geht von der Erkenntnis aus, daß beim Eingriff eines Zahnriemens in eine Riemenscheibe zwischen den einzelnen Zahnblöcken aufgrund der dort vorhandenen geringen Riemendicke eine Art "Einknicken" entsteht, das zum Polygoneffekt beiträgt. Um diesem Einknicken entgegenzuwirken, wird erfindungsgemäß vorgeschlagen, einen auf der Zahnseite des Riemens anzubringenden wulstförmigen Verstärkungsstreifen mit dem Ziel vorzusehen, den Riemen im, Umlauf biegesteifer zu machen. Gemäß der Erfindung wird von einer Abstützung auf dem Kopfkreis ausgegangen. Die Zähne der Scheiben stützen den Zahnriemen im Nutgrund ab.

Die Abstützung kann aber auch in den Zahnlücken der Zahnscheibe erfolgen. Besonders vorteilhaft im Hinblick auf eine Verminderung des Polygonwirkung ist es, wenn eine gleichmäßig auf den Zahnköpfen und Zahnlücken erfolgende Abstützung des Zahnriemens gewährleistet ist. Zu diesem Zweck wird - wegen der Elastizität des Riemenmaterials - die Höhe der Riemenzähne geringfügig höher ausgebildet als die Scheibennuten, um eine Abstützung des Riemens auch zwischen den Scheibenzähnen zu verwirklichen.

Der umlaufende Verdickungsstreifen wird im wesentlichen kontaktfrei mit der Scheibenumfangsfläche durchgehend angeordnet. Es ist somit eine radiale Abstützung im Bereich der Festigkeitsträgerebene, der neutralen Faser, vorhanden.

Entsprechend eines alternativen Vorschlags ist eine leichte Abstützung des Verdickungsstreifens auf der Scheibenumfangsfläche realisiert. Hierdurch gibt es keine durchhängenden Querbereiche des Riemens, so daß die Festigkeitsträgerlage in einer Ebene auf gleichem radialen Niveau verbleibt, Dadurch nimmt die Festigkeitsträgerlage über ihre gesamte Breite gleichmäßig die Umfangskräfte auf.

Aus dem gesagten geht hervor, daß der wesentliche Grundgedanke der Erfindung in der weitgehenden Vermeidung eines "Einknickens" des Riemens im Rhythmus der Zahnfolge bzw. der Quernuten besteht, Dafür ist es nicht erforderlich, daß die wulstförmigen Längsränder des Riemens Laufstreifen nach Art eines Glattriemens bilden. Zur Unterdrückung des "Einknickens" genügt es, wenn die Längsränder des Riemens als bloße Verdickungs- bzw. Verstärkungsstreifen ausgebildet sind. Eine direkte Kontaktnahme mit dem jeweiligen glatten Rand der Riemenscheibe ist nicht erforderlich. Durch die Verdickungsstreifen wird der Riemen so biegesteif, daß eine radiale Abstützung auf der Verzahnung zugelassen werden kann. Erfindungswesentlich ist, daß die Verdickungsstreifen, die auf der Laufseite angeordnet sind, im Unterschied zu Längsstreifen gemäß dem Stand der Technik nicht durch Quernuten unterbrochen sind.

Mit Hilfe des erfindungsgemäßen Zahnriementriebes ist eine formschlüssige Kraftübertragung, z. B. für Nockenwellen-Steuertriebe von Verbrennungsmotoren, bei gleichzeitiger Vermeidung des bisher üblichen negativen Polygoneffektes gegeben.

Bei größeren Riemenbreiten kann in der Riemenmitte ein weiterer Verdickungsstreifen zur zusätzlichen Versteifung und/oder Abstützung vorgesehen werden.

Durch Verwendung des erfindungsgemäßen Zahnriementriebes werden Polygoneffekt-Schwingungen vermieden, woraus ein geräuscharmer Lauf resultiert. Aufgrund einer besseren Stabilisierung durch die beidseitige Verbindung der Einzelzähne über die Verdickungsstreifen ergibt sich außerdem eine längere Riemenlebensdauer.

Der erfindungsgemäße Zahnriementrieb ist prinzipiell für alle Synchronantriebe (z. B. Nockenwellen-Steuertriebe, Werkzeugmaschinen) einsetzbar. Er wird anhand der beigefügten Zeichnungen näher erläutert; es zeigt:
Fig. 1 eine Riemen/Scheiben-Anordnung, ausschnittsweise, im Querschnitt;
Fig. 2 eine Abwandlung der in Fig. 1 dargestellten Anordnung, ebenfalls ausschnittsweise und im Querschnitt;
Fig. 3 eine verbreiterte Ausführungsform entsprechend der Ausführung gemäß Fig. 1;
Fig. 4 wiederum eine verbreiterte Abwandlung unter Verknüpfung von Merkmalen gemäß Fig. 2 und Fig. 3.

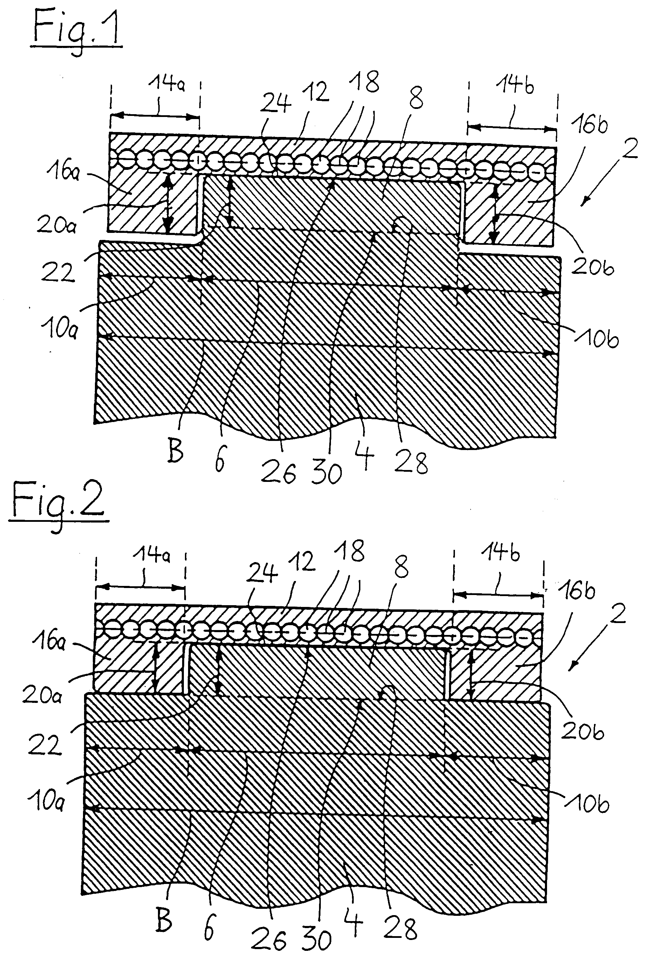

Die in Fig. 1 dargestellte Anordnung 2 zeigt ausschnittsweise den Schnitt durch eine erfindungsgemäße Riemenscheibe (Zahnscheibe) 4. Diese Riemenscheibe 4 weist in ihrem mittleren Bereich 6 einen Zahnkranz 8 auf, während die Randbereiche 10a, 10b zylindrisch gestaltet sind. Diese Riemenscheibe (Zahnscheibe) 4 steht mit einem Zahnriemen 12 in Eingriff. Die in der Abbildung nach unten gerichtete Laufseite des Zahnriemens 12 ist an beiden zu den Randbereichen 10a, 10b der Zahnscheibe 4 korrespondierenden Randzonen 14a, 14b mit einem ungezahnten (glatten) Verdickungsstreifen (Verstärkungsstreifen) 16a, 16b versehen.

Zur Erhöhung der Zugfestigkeit weist der Riemen 12 eine Verstärkungseinlage 18 aus Cord oder Gewebe auf. Die zylindrischen Bereiche 10a, 10b der Zahnscheibe 4 und die glatten Verdickungsstreifen 16a, 16b des Zahnriemens 12 sind derartig ausgestaltet, daß der Riemen 12 im Bereich 14a, 14b der Verdickungsstreifen 16 nicht von den zylindrischen Bereichen 10a, 10b der Scheibe 4 abgestützt wird. Dabei ist es nicht erforderlich, daß der Radius der zylindrischen Bereiche 10a, 10b und der Radius des Zahngrundes 30 der Scheibe 4 miteinander identisch sind. Entscheidend ist, daß beim Ablaufen des Riemens 12 auf der Scheibe 4 ein gewisser Abstand zwischen Verdickungsstreifen 16a, 16b und zylindrischem Bereich 10a, 10b der Scheibe 4 verbleibt.

Beim Betrieb des Zahnriementriebes 2 erfolgt eine Abstützung des Riemens 12 ausschließlich im Verzahnungsbereich 6. Die in Fig 2 dargestellte Riemen/Scheiben-Anordnung unterscheidet sich von der zuerst beschriebenen Anordnung dadurch, daß die Höhe 20a, 20b der seitlichen Verdickungsstreifen 16a, 16b des Zahnriemens 12 und der Radius der zylindrischen Randstreifen 10a, 10b der Scheibe 4 so gewählt sind, daß beim Betrieb des Riemens 12 eine Abstützung nicht nur im Verzahnungsbereich 6 sondern zusätzlich ein Abstützung auch im zylindrischen Randbereich 10a, 10b der Scheibe erfolgt.

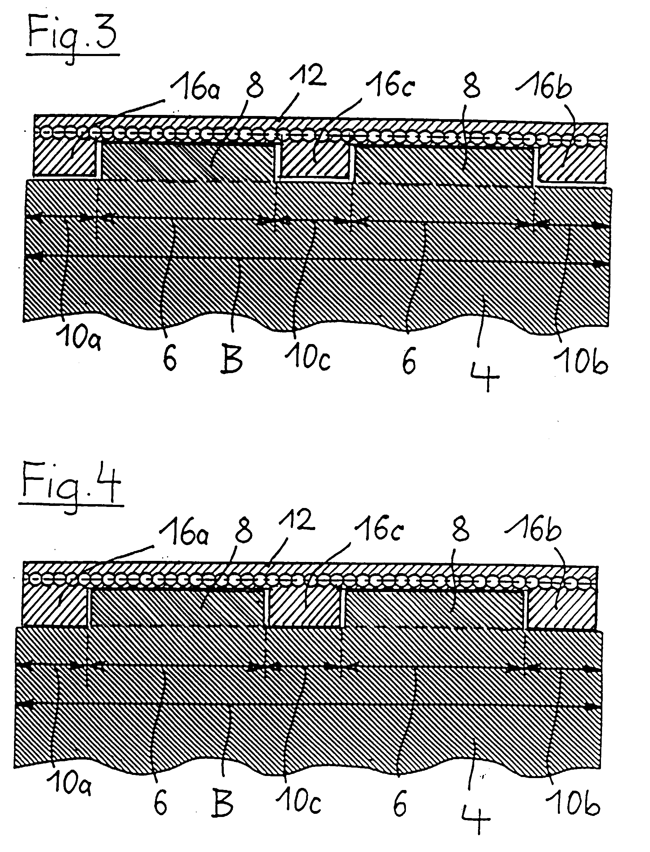

Die in Fig. 3 dargestellte Anordnung unterscheidet sich von der in Fig. 1 dargestellten nicht nur in der größeren Breite B der Riemen/Scheiben-Anordnung 2. Zur zusätzlichen Führung weist der Riemen 12 in seiner Mitte einen weiteren Verdickungsstreifen 16c auf. Dieser Verdickungsstreifen 16c korrespondiert zu einer mittigen Zylinderfläche 10c der Scheibe 4.
Auch hierbei sind die Abmessungen insgesamt so gewählt, daß auch hier die radiale Abstützung des Riemens 12 in dem Bereich der Verzahnung 8 erfolgt.

Fig 4 stellt eine Abwandlung der in Fig. 3 dargestellten Anordnung dar. Aber ähnlich wie gemäß Fig. 2 erfolgt auch hier eine radiale Abstützung des Riemens 12 auf voller Breite B.

### Bezugszeichenliste

- 2: Antriebsanordnung, Zahnriementrieb
- 4: Riemenscheibe, Zahnscheibe
- 6: mittlerer Bereich der Riemenscheibe, Verzahnungsbereich
- 8: Zahnkranz, Verzahnung, Zähne
- 10a, 10b: zylindrischer Bereich,
Randbereich der Riemenscheibe
- 10c: mittige Zylinderfläche der Scheibe
- 12: Zahnriemen, Riemen
- 14a, 14b: Randzonen des Zahnriemens
- 16a, 16b: Verdickungsstreifen (Verstärkungsstreifen) des Zahnriemens
- 16c: weiterer Verdickungsbereich
- 18: Verstärkungseinlage
- 20a, 20b: Höhe des Verdickungsstreifens 16a, 16b
- 22: Höhe der Verzahnung
- B: Breite der Riemen/Scheiben-Anordnung
- 24: Riemen-Zahngrund
- 26: Scheiben-Zahnkopf
- 28: Riemen-Zahnkopf
- 30: Scheiben-Zahngrund

## Patentansprüche

1. Aus einem Zahnriemen (12) und einer Zahnscheibe (4) bestehender geräuscharmer Zahnriementrieb (2),
**dadurch gekennzeichnet,**
daß die Zahnscheibe (4) mindestens einen zylindrisch ausgebildeten Bereich (10a, ...) aufweist, und
daß die Laufseite (Zahnseite) des Zahnriemens (12) korrespondierend zu dem mindestens einen zylindrischen Bereich (10a, ...) der Zahnscheibe (4) mit mindestens einem ungezahnten, nicht unterbrochenen (glatten) Verdickungsstreifen (Verstärkungsstreifen 16a, ...) versehen ist,
wobei seine Höhe (20a, ...) und der Radius des mindestens einen zylindrischen Bereichs (10a, ...) der Zahnscheibe (4) so gewählt sind,daß beim Betrieb des Riementriebs (2) eine Abstützung des Riemens (12) auf der Zahnscheibe (4) durch Kontakt zwischen Riemen-Zahngrund (24) und Scheiben-Zahnkopf (26) und/oder zwischen Riemen-Zahnkopf (28) und Scheiben-Zahngrund (30) erfolgt.

2. Zahnriementrieb nach Anspruch 1,
**dadurch gekennzeichnet,**
daß die Höhe (20a, ...) des mindestens einen Verstärkungsstreifens (16a, ...) und der Radius des mindestens einen zylindrischen Bereichs (10a, ...) der Zahnscheibe (4) so gewählt sind,
daß zusätzlich eine Abstützung des Riemens (12) auf der Riemenscheibe (4) durch Kontakt des mindestens einen Verdickungsstreifens (Verstärkungsstreifen 16a, ...) mit dem zugeordneten mindestens einem zylindrischen Bereich (10a, ...) der Riemenscheibe (4) gegeben ist.
